# EUROPEAN PATENT APPLICATION

(11) **EP 2 708 277 A1**
(43) Date of publication of application: **19.03.2014**
(21) Application number: 12184291.8
(22) Date of filing: 13.09.2012
(51) Int. Cl.: B01D 61/36, B01D 53/14

(54) **Compact membrane gas desorption**

(71) Applicant: Nederlandse Organisatie voor Toegepast -Natuurwetenschappelijk Onderzoek TNO, 2628 VK Delft (NL)
(72) Inventor: van der Ham, Leonardus Volkert, 2628 VK Delft (NL); Goetheer, Earl Lawrence Vincent, 2628 VK Delft (NL); van de Runstraat, Annemieke, 2628 VK Delft (NL)
(74) Representative: Jansen, Cornelis Marinus

(57) **Abstract**

The invention is directed to a membrane gas desorption process, a gas separation process and a membrane gas desorption module.

A more energy efficient and compact membrane gas desorption process can be obtained by integrating membrane gas desorption and heat exchange.

In the process, lean absorption liquid is evaporated downstream the membrane and the vapour is provided at the permeate side of the membrane. The vapour passes through the membrane and condenses in the rich absorption liquid at the retentate side of the membrane, thus heating said rich absorption liquid and causing desorption of absorbed gas.

## Description

The invention is directed to a membrane gas desorption process, a gas separation process and a membrane gas desorption module.

Membrane gas desorption can be used for desorption of gas(es) absorbed in an absorption liquid as an improved desorption process compared to a conventional stripper. In a typical absorption based gas separation process, one or more gases are absorbed from a gas mixture into a selective absorption liquid to create absorption liquid with a relatively high loading of absorbed gas(es) (rich absorption liquid). For the separation of acid gases such as CO₂ and H₂S from gas mixtures typical absorption liquids are aqueous amine solutions. Then, the rich absorption liquid can be regenerated by desorption of the gas(es) to provide absorption liquid with relatively low loading of these gas(es) (lean absorption liquid). The whole process is desirably carried out in an energy efficient way. Since regeneration of the absorption liquid takes up a major part of the energy use of such a gas separation process, energy efficiency of the regeneration is a key parameter.

In a conventional absorption liquid regeneration process a stripper is used. In this stripper the temperature at the bottom is high, to generate steam and promote desorption of absorbed gas. The heating of the absorption liquid as well as evaporation and recondensation of absorption liquid, such as water (creation of steam), all contribute to the energy requirement of the regeneration. Thus, a high temperature approach is created for heat exchange between lean and rich absorption liquid.

Membrane gas desorption processes allow for desorption similar to a conventional stripper. The desorption is thus at least in part induced by heating the absorption liquid. This causes increased evaporation of the absorption liquid and higher heating / boiler costs.

One approach for improving the energy efficiency of membrane gas desorption processes is the development of membranes capable of suppressing absorption liquid evaporation. Available membranes do so however only to a limited extend.

Another approach is heat exchange between relatively cold rich absorption liquid and relatively warm lean absorption liquid. Such heat exchange is not integrated in the membrane gas desorption process. This means that one needs to heat the complete flow of absorption liquid to the required desorption temperature and can exchange only part of the heat needed. Additional heating and cooling is still necessary. Moreover, one needs separate pieces of equipment to perform desorption and heat exchange. This has the disadvantages of lower energy-efficiency and less compact equipment.

Therefore, a need exists for a more energy-efficient and compact membrane gas desorption process.

WO-A-00/72947 discloses a membrane distillation method (Memstill^{®}), in particular for desalination of salt water, wherein water evaporated through the membrane is allowed to condense on a wall of a salt water supply channel, thus transferring heat to warm the salt water and using heat of condensation.

Objective of the present invention is to provide a membrane gas desorption process avoiding or mitigating one or more of the mentioned disadvantages. A specific objective is increased energy efficiency.

The inventors surprisingly found that one or more of the above mentioned objectives can at least in part be met by integrating membrane gas desorption and heat exchange.

The terms "permeate" and "retentate" are relative to the desorbed gas. The term "permeate" as used herein indicates the stream comprising desorbed gas permeated through the membrane. The term "retentate" as used herein indicates absorption liquid and any compounds comprised therein, including vapour permeated through the membrane into absorption liquid.

The term "retentate side" of a membrane indicates a side of a membrane exposed to the retentate during the process; "permeate side" indicates the other side of a membrane.

The term "vapour" as used herein refers to evaporated absorption liquid. The term "vapour" includes evaporated components or parts of absorption liquid, such as evaporated water from an aqueous amine solution as absorption liquid.

Rich absorption liquid indicates absorption liquid relatively rich in absorbed gas(es) as provided in the feed stream. Lean absorption liquid indicates absorption liquid, relatively lean in absorbed gas(es) compared to the rich absorption liquid. The term rich and lean are relative to each other and do not imply any absolute limit on gas loading of absorption liquid.

In a first aspect, the invention relates to a membrane gas desorption process, for desorption of a gas absorbed in an absorption liquid, comprising
(a) providing rich absorption liquid, rich in said gas,
(b) heating said rich absorption liquid in contact with a membrane,
(c) desorbing at least part of said gas and passing at least part of said gas through said membrane from a retentate side to a permeate side of said membrane, thus providing desorbed gas and lean absorption liquid,
(d) evaporating part of said lean absorption liquid, downstream the membrane, thus providing vapour and absorption liquid, providing at least part of said vapour at the permeate side of the membrane and passing at least part of said vapour through the membrane from the permeate side to the retentate side,
(e) condensing at least part of said vapour in the absorption liquid at the retentate side of the membrane and using at least part of the heat of condensation for heating said rich absorption liquid in (b).

The gas can comprise any gas that can be absorbed in a liquid. Suitably, the gas comprises an acid gas such as CO₂ and/or H₂S. Multiple gasses can be simultaneously desorbed in the process.

The process is preferably a continuous process. Each step can be carried out as a plurality of steps; the process can comprise a plurality of heating steps, of desorption steps, of evaporation steps and of condensation steps. The absorption liquid can be contacted with a plurality of membranes. The heating step, desorption step and condensation step can be carried out as one step.

The absorption liquid can be any liquid wherein the gas can be absorbed and also a mixture of liquids. Preferably, the absorption liquid is aqueous. An aqueous absorption liquid may comprise one or more compounds to increase the absorption capacity for the gas(es), such as carbonate salts, phosphate salts, amino acid salts and amines, preferably amines. These compounds, in particular amines, are suitably used for acid absorbed gasses.

The absorption liquid is readily selected by the skilled person, as described in WO-A-2012/096576.

Many absorption liquids can be considered. Suitable absorption liquids include chemical solvents and physical solvents. For chemical solvents, absorption primarily depends on a chemical reaction between the solvent and the gaseous component. For physical solvents, absorption primarily depends on the physical solubility of the gaseous component. In general, the regeneration heat for physical solvents is much lower than for chemical solvents. In addition, physical solvents are often less corrosive. However, a lowering of the pressure is necessary to obtain desorption for physical solvents. The absorption liquid choice can be optimised based on temperature and pressure, depending on the situation, in particular the gases involved and the type of desorption membrane used.

Some examples of physical solvent absorption liquids include dimethylether of tetraethylene glycol, N-methyl-2-pyrrolidone, propylene carbonate, methanol and mixtures thereof.

The rich absorption liquid is suitably absorption liquid coming from an absorption process. The rich absorption liquid, as obtained from such an absorption process is typically at relatively low temperature. Often, the rich absorption liquid is also at relatively high pressure. Suitably, the rich absorption liquid is at a pressure of 1 bar or more, such as 1-200 bar, suitably 10-100 bar, suitably 50-100 bar. The rich absorption liquid can also be at relatively low pressure, such as 1-5 bar, preferably 1-2 bar.

Suitably, the rich absorption liquid is at -50 °C to 300 °C, suitably 0 °C to 150 °C, suitably 20 °C to 110 °C, suitably 40-90 °C.

Suitably, the loading of the rich absorption liquid with absorbed gas is 0.3-0.9 mol gas per mol active absorption liquid component. If the loading is too low, high absorption liquid circulation rates are necessary. Too high circulation of the absorption liquid will have a negative effect on process economics.

Rich absorption liquid is heated to obtain heated absorption liquid. Heating of the rich absorption liquid causes the gas-liquid equilibrium to shift to desorption of at least part of the gas from the absorption liquid.

In the process, at least part of the gas passes through the membrane from the retentate side to the permeate side. Heated absorption liquid thereby becomes lean absorption liquid.

Suitably, the retentate side of the membrane is at a pressure of 1-200 bar, preferably 5-100 bar, more preferably 50-100 bar. The retentate side of the membrane can also be at relatively low pressure, such as 1-5 bar, preferably 1-2 bar.

The temperature of the desorption step is preferably in the range 10-500 °C, preferably 30-300 °C, more preferably 50-150 °C.

Preferably, the absorbed gas loading is reduced by 10-100 %, more preferably 30-100 %, even more preferably 50-100 %, most preferably 60-100 %, wherein the absorbed gas loading is the absorbed gas loading in mol absorbed gas per kg absorption liquid or the effective absorbed gas loading in mol absorbed gas per mol active absorption liquid component, or both. Preferably, the absorbed gas loading is reduced by these amounts as the absorbed gas desorbs and passes through the membrane.

The process comprises passing the gas through the membrane from the retentate side to the permeate side of the membrane, providing desorbed gas at the permeate side and lean absorption liquid at the retentate side. Desorbed gas is obtained as a gas product stream at the permeate side. This gas product stream may comprise other compounds, such as vapour.

The membrane functions as a barrier for absorption liquid at the retentate side. Preferably, the membrane also acts as a barrier for compounds present in the absorption liquid, other than the gas. The purity of the gas product stream is then even higher.

The membrane suitably has a thickness of 10-500 µm, such as 15-300 µm or 50-200 µm.

A porous support for the membrane for improving mechanical stability, such as an organic polymer or ceramic support can be applied.

The process can be operated at relatively high process pressures such as 5-100 bar. For processes at relatively high process pressures, the pressure difference between the retentate side and the permeate side of the membrane (trans membrane pressure) suitably is 0.05 bar or more, preferably 0.05-0.5 bar, more preferably 0.1-0.3 bar, wherein the pressure at the permeate side of the membrane is lower than the pressure at the retentate side of the membrane.

The process can also be operated at relatively low process pressures, such as 1-5 bar. For processes at relatively low process pressures, the trans membrane pressure is suitably 0.01 bar or more, preferably 0.05-1 bar, preferably 0.5 bar or less, more preferably 0.3 bar or less, such as 0.05-0.3 bar.

The membrane is preferably highly permeable for the desorbed gas.

Preferably, the membrane has a permeability for the desorbed gas of 200 l/hr/m²/bar or more, more preferably 200-40000 l/hr/m²/bar, even more preferably 1000-5000 l/hr/m²/bar, with volume permeated desorbed gas; normalized to standard temperature and pressure.

Preferably, the membrane has a permeability for vapour of 200 l/hr/m²/bar or more, more preferably 200-40 000 l/hr/m²/bar, even more preferably 1000-5000 l/hr/m²/bar, with volume permeated vapour.

The membrane preferably remains stable and retains its high flux at the desorption temperature, in contact with the absorption liquid, for a sufficient period of time. Furthermore, the membrane preferably shows good barrier properties towards the absorption liquid. Accordingly, the pressure of the absorption liquid at the retentate side of the membrane will hardly (or not) be reduced while the absorbed gas is desorbed, apart from the pressure drop from flow resistance and gas desorption.

For aqueous absorption liquids, the membrane is preferably hydrophobic. Suitable membranes include hydrophobic high permeable glassy polymer membranes. Preferably, the membrane comprises membrane materials such as poly(1-trimethylsilyl-1-propyne), poly(4-methyl-2-pentyne), poly(1-trimethylgermyl-1-propyne), poly(vinyltrimethylsilane), and poly(tetrafluoroethylene). The use of some of these membranes in membrane gas desorption has been described in WO-A-2006/004400. In addition, suitable inorganic membranes can be applied.

In an embodiment a spacer material is applied in the membrane desorption unit. Preferably, the spacer material is compatible with the absorption liquid it is emerged in. Spacers are mesh-type materials in between membrane sheets and the membrane module walls. These spacers are there to keep the sheets apart and to distribute the fluid across the membrane. In case of an aqueous absorption liquid, it is recommended to use a hydrophilic spacer material. In case of a non-aqueous absorption liquid hydrophobic spacers are recommended.

The process comprises condensing at least part of the vapour and using at least part of the heat of condensation for heating the rich absorption liquid. In this way, the heat of condensation, also known as heat of evaporation, or latent heat, of the vapour is at least partly used for heating the rich absorption liquid. Internal heat is recovered and the energy efficiency of the process is increased.

The heating element duty for heating the rich absorption liquid can advantageously be reduced by up to 40 %, also by less, such as by up to 10 %, up to 20 %, up to 30 %; or even by more than 40 %.

The process further advantageously allows for a compact absorption-desorption unit, as heat exchange is integrated.

The process comprises evaporating part of said lean absorption liquid, downstream the membrane, thus providing vapour and absorption liquid, providing at least part of said vapour at the permeate side of the membrane and passing at least part of said vapour through the membrane from the permeate side to the retentate side.

Lean absorption liquid from the retentate side of the membrane is evaporated. The evaporation is carried out by heating and/or flashing. Suitably a part of the absorption liquid obtained downstream the membrane is heated, preferably all is heated.

Preferably, 0.05-15 wt.% of the lean absorption liquid is evaporated, more preferably 0.1-10 wt.%.

Vapour obtained by the evaporation is provided at the permeate side of the membrane, preferably 50 wt.% or more, more preferably 90 wt.% or more, preferably all obtained vapour.

The relatively high vapour pressure at the permeate side of the membrane prevents or reduces evaporation of vapour at the retentate side of the membrane and transport of vapour through the membrane from the retentate side to the permeate side. Preferably, evaporation at the retentate side of the membrane is reduced by 99 % or more.

Preferably, 10 wt.% or more of the vapour at the permeate side of the membrane passes through the membrane to the retentate side, more preferably 50 wt.% or more.

Preferably, the amount of vapour that leaves the process in the gas product stream should be minimised. This can be done by allowing a lower temperature at the gas product stream outlet and at the rich absorption liquid inlet.

Preferably, the gas product stream comprises 50 wt.% or less vapour, more preferably 10 wt.% or less, such as 0.01-5 wt.%.

Vapour passes through the membrane from the permeate side to the retentate side. The vapour condenses in the absorption liquid at the retentate side of the membrane. The absorption liquid is thereby heated at the retentate side of the membrane. In this way, rich absorption liquid is heated at the retentate side of the membrane in contact with the membrane. The process can comprise additional heating, both of absorption liquid in contact with the membrane and of absorption liquid not in contact with the membrane, such as upstream the membrane and downstream the membrane.

As the invention allows for condensation, heating and desorption to occur at the retentate side of the membrane, in one channel, the process is advantageously compact.

Preferably, the vapour at the permeate side of the membrane and the absorption liquid at the retentate side of the membrane are in counter-current flow. This provides good efficiency and good internal heat recovery.

Preferably, the heated absorption liquid at the retentate side of the membrane and the desorbed gas at the permeate side of the membrane are in counter-current flow. This provides good membrane transport of gas.

Preferably, the process further comprises heat exchange between absorption liquid obtained in step (d) and rich absorption liquid. Preferably, this is done by the process comprising passing absorption liquid obtained in step (d) through a channel in heat exchange with absorption liquid at the retentate side of the membrane. The channel comprises one or more heat conductive walls in heat exchange with absorption liquid at the retentate side of the membrane. This provides good efficiency and heat recovery. The absorption liquid obtained in step (d) is typically relatively warm compared to the absorption liquid at the retentate side of the membrane.

Preferably, step (d) comprises desorbing gas and providing desorbed gas at the permeate side of the membrane, such that a total desorption of preferably 10-100 wt.%, more preferably 50-100 wt.% of the gas in the absorption liquid is obtained, compared to the feed stream of rich absorption liquid.

The process can be a part of a gas separation process. In an aspect, the invention relates to a gas separation process for separating gasses in a mixed gas stream comprising selectively absorbing a gas from said mixed gas stream in an absorption liquid, providing rich absorption liquid; and desorbing said gas at least in part from said rich absorption liquid by a desorption process according to this invention. Preferably, said gas comprises for example CO₂ and/or H₂S. One or more gasses may be separated from the mixed gas stream and selectively absorbed.

Suitable gas separation processes include treatment of natural gas, treatment of biogas; (CO₂ and/or H₂S) / H₂ separation and CO₂ and/or H₂S separation from a gas stream such as flue gas. Flue gas cleaning and biogas upgrading are performed suitably at low pressure and natural gas sweetening suitably at high pressure. In this process, the lean absorption liquid stream is preferably used again in the absorption step. Preferably, a steady state is reached in such process. Preferably, the amount of gas desorbed is approximately 100 wt.% of the gas absorbed in the previous absorption step, such as 95-105 wt.%, preferably 99-101 wt.%.

In a further aspect, the invention relates to a membrane gas desorption module, preferably for a membrane gas desorption process as described, comprising
- a first channel having an inlet for a rich absorption liquid, rich in absorbed gas,
- a second channel for vapour and desorbed gas, having an outlet for desorbed gas,
- a membrane between the first channel and the second channel, said membrane capable of passing through said vapour and desorbed gas,
- a heating element for evaporating absorption liquid, connected to an outlet of the first channel for absorption liquid and connected to an inlet of the second channel for vapour.

Preferably, the heating element comprises an outlet for heated absorption liquid. Preferably, the module comprises a third channel connected to the outlet of the heating element for heated absorption liquid, said third channel comprising a heat conductive wall for heat exchange between heated absorption liquid in the third channel and rich absorption liquid in the first channel.

Preferably, the heating element is also for desorbing gas and the inlet of the second channel is for vapour and gas.

The membrane is suitably a flat sheet, spirally wound or tubular membrane. Preferably the membrane is a spirally wound membrane. A spirally wound membrane provides a high surface area relative to a flat sheet membrane and high heat exchange contact surface relative to a tubular membrane. Suitable flat membrane modules may be prepared as described in WO-A-2011/019278. Such membrane modules combine good chemical resistance, such as against desorbed gas and/or vapour, with high temperature resistance. The walls between the channels are accordingly flat sheets, spirally wound or tubular; preferably the module comprises stacked membranes and walls between the channels.

The modules can be used in series, forming a unit comprising a plurality of modules arranged in series. Modules in a unit are preferably thermally insulated from each other. Preferably the modules are physically apart from each other, such as separated by an air gap between the modules.

The modules in a unit can operate at different pressures with respect to each other, by using both heating and pressure reduction to desorb gas. Pressure reduction can be applied in step (d) to desorb gas.

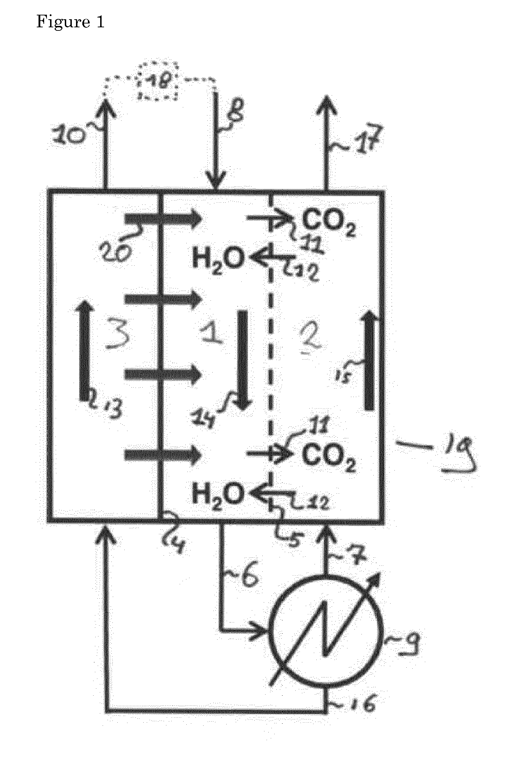

A module will now be illustrated by the non-limiting Figure 1. The module 19 comprises channel 1 for absorption liquid, channel 2 for vapour and desorbed gas, channel 3 for absorption liquid, membrane 5 between channel 1 and channel 2, heat conductive wall 4 between channel 3 and channel 1, and heating element 9. Heating element 9 has an inlet connected through connection 6 to an outlet of channel 1 for absorption liquid, and outlets connected with connection 7 for vapour to an inlet of channel 2 and with connection 16 for absorption liquid to an inlet of a channel 3.

A feed stream 8 of rich absorption liquid is provided at channel 1 at the retentate side of membrane 5. Rich absorption liquid 14 flows through channel 1 and is heated as vapour 12 condenses in it. Gas 11 desorbs and passes through membrane 5 to channel 2. Lean absorption liquid flows to heating element 9 through connection 6. Heating element 9 evaporates part of the lean absorption liquid. The obtained vapour is provided in channel 2 through connection 7. The non-evaporated lean absorption liquid is passed through connection 16 and through channel 3 as stream 13 and is cooled by heat exchange 20 with stream 14 through wall 4. Gas can be desorbed in heating elements 9 and the stream in connection 7 can comprise desorbed gas in addition to vapour. Regenerated lean absorption liquid 10 is obtained as product, also obtained is a stream 17 comprising desorbed gas 11 and vapour 7 that was not condensed. Channel 3 is optional; connection 16 can be an outlet. As this would however significantly reduce the energy efficiency, presence of channel 3 is highly preferred.

Feed stream 8 is optionally obtained in an absorption unit 18 (dashed). Lean liquid stream 10 is optionally recycled to absorption unit 18 (dashed connection).

A plurality of modules can be used in a unit. Such a unit can comprise a first and second module as described, arranged in series, wherein the first is first relative to the flow of the rich absorption liquid.

The unit may comprise more than two modules in series, such as 3-10 or even more.

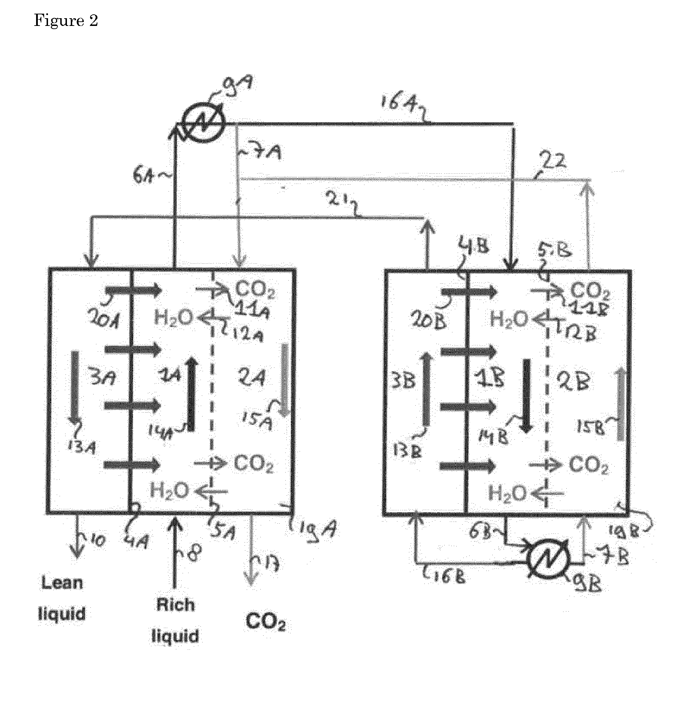

Multiple modules can be used in series as shown in Figure 2. Module 19A and module 19B are used in series and alternate arranged. Feed stream 8 is provided at channel 1A. The lean absorption liquid passed through 6A is partly evaporated in 9A. Non-evaporated absorption liquid is provided through connection 16A to channel 1B of module B where further desorption occurs. The lean absorption liquid obtained in channel 1B is passed through connection 6B and partly evaporated in 9B. Non-evaporated absorption liquid is passed through connection 16B to channel 3B. It is cooled as stream 13B in channel 3B by heath exchange 20B and passed through connection 21 to channel 3A for further cooling by heat exchange 20A. Vapour 15B obtained in 9B is passed through connection 7B to channel 2B and passed through channel 2B as stream 15B. Stream 15B partly permeates through membrane 5B and condenses in 1B. The other part is passed through connection 22 to channel 2A together with desorbed gas 11B. Vapour obtained in 9A is passed through connection 7A and added to stream 22 and provided in channel 2A at the permeate side of membrane 5A. Gas can be desorbed in heating elements 9A and 9B and the streams in connection 7B and 7A can comprise desorbed gas in addition to vapour.

The content of each document cited herein is herewith completely incorporated by reference, in particular WO-A-2011/019278, WO-A-2006/004400, WO-A-00/72947, and WO-A-2012/096576.

## Claims

1. Membrane gas desorption process, for desorption of a gas absorbed in an absorption liquid, comprising
(a) providing rich absorption liquid, rich in said gas,
(b) heating said rich absorption liquid in contact with a membrane,
(c) desorbing at least part of said gas and passing at least part of said gas through said membrane from a retentate side to a permeate side of said membrane, thus providing desorbed gas and lean absorption liquid,
(d) evaporating part of said lean absorption liquid, downstream the membrane, thus providing vapour and absorption liquid, providing at least part of said vapour at the permeate side of the membrane and passing at least part of said vapour through the membrane from the permeate side to the retentate side,
(e) condensing at least part of said vapour in the absorption liquid at the retentate side of the membrane and using at least part of the heat of condensation for heating said rich absorption liquid in (b).

2. Process according to claim 1, wherein the vapour at the permeate side of the membrane and the absorption liquid at the retentate side of the membrane are in counter-current flow.

3. Process according to any one of claims 1-2, wherein the heated absorption liquid at the retentate side of the membrane and the desorbed gas at the permeate side of the membrane are in counter-current flow.

4. Process according to any one of claims 1-3, further comprising heat exchange between absorption liquid obtained in step (d) and rich absorption liquid.

5. Process according to claim 4, comprising passing absorption liquid obtained in step (d) through a channel in heat exchange with absorption liquid at the retentate side of the membrane.

6. Process according to any one of claims 1-5, wherein step (d) comprises desorbing gas and providing desorbed gas at the permeate side of the membrane.

7. Gas separation process for separating gasses in a mixed gas stream comprising
(a) selectively absorbing a gas from said mixed gas stream in an absorption liquid, providing rich absorption liquid,
(b) desorbing said gas at least in part from said rich absorption liquid by a membrane gas desorption process according to any one of claim 1-6.

8. Gas separation process according to claim 7, wherein said one or more gasses are CO₂ and/or H₂S.

9. Membrane gas desorption module, preferably for a process according to any one of claims 1-8, comprising
- a first channel having an inlet for a rich absorption liquid, rich in absorbed gas,
- a second channel for vapour and desorbed gas, having an outlet for desorbed gas,
- a membrane between the first channel and the second channel, said membrane capable of passing through said vapour and desorbed gas,
- a heating element for evaporating absorption liquid, connected to an outlet of the first channel for absorption liquid and connected to an inlet of the second channel for vapour.

10. Membrane gas desorption module according to claim 9 further comprising a third channel connected to an outlet of the heating element for heated absorption liquid, comprising a heat conductive wall for heat exchange between heated absorption liquid in the third channel and rich absorption liquid in the first channel.
